# FASCICULE DE BREVET EUROPEEN

(11) **EP 0 518 799 B1**
(45) Date de publication et mention de la délivrance du brevet: **10.04.1996**
(21) Numéro de dépôt: 92470018.0
(22) Date de dépôt: 27.05.1992
(51) Int. Cl.: B24B 35/00

(54) **Machine de polissage ayant un mouvement combiné de rotation et de translation alternative de l'outil**
Feinstbearbeitungsmaschine mit kombinierter Umdrehung und Hin- und Herbewegung des Werkzeuges
Finishing machine with a combined rotation and reciprocation of the tool

(30) Priorité: 04.06.1991 FR 9106754
(43) Date de publication de la demande: 16.12.1992
(73) Titulaire: SEVA, société dite,, F-71100 Chalon-sur-Saône (FR)
(72) Inventeur: Attanasio, Claude, F-71100 Chalon sur Saône (FR); Seigue Jean-Claude, F-71530 Virey le Grand (FR)
(74) Mandataire: Puit, Thierry

(56) Documents cités:
- EP-A- 0 273 055
- DE-A- 1 652 119
- DE-A- 2 261 014
- DE-C- 868 410
- GB-A- 2 023 466
- US-A- 2 230 953
- US-A- 2 548 979
- US-A- 3 300 907
- MACHINES AND TOOLING. vol. 44, no. 12, 1973, MELTON MOWBRAY GB pages 47 - 48 A. P.CHERNYI ET AL. 'HONING A HELICAL SURFACE WITH AN OSCILLATING ABRASIVE TOOL'

## Description

La présente invention est relative aux machines pour le polissage de pièces, notamment de moules destinés à la fabrication d'articles présentant un bon état de surface.

On a décrit au brevet français n° 73 14 262 déposé le 13 avril 1973, une machine pour le polissage de moules comportant un châssis, une table porte-pièce reliée à des moyens aptes à lui communiquer au moins un mouvement de translation longitudinale, limité par des butées et un support portant au moins un ensemble de polissage constitué par un porte-outil déplaçable en translation, par des moyens pour communiquer à ce porte-outil un mouvement de translation alternatif et par des moyens presseurs appliquant ledit porte-outil sur la pièce à polir, avec un effort constant mais réglable.

On a par ailleurs décrit au certificat d'addition n° 75 10 522 au brevet précité une machine pour le polissage de moules dont les moyens aptes à communiquer un mouvement de translation au porte-outil sont constitués par un moteur fixé sur le corps de l'ensemble de polissage et dont l'arbre monté libre en rotation dans le corps précité est solidaire d'un excentrique coopérant avec la face d'un logement ménagé dans le porte-outil, lui-même monté libre en translation dans le corps précité.

On connaît par le document GB-A-2 023 466 une machine à polir comprenant un moyen pour communiquer au porte-outil un mouvement de translation. Ce moyen est constitué par un ensemble bielle-manivelle monté dans un coulisseau.

Bien que les machines du type précité donnent de très bons résultats, l'invention vise à améliorer encore la qualité d'état de surface des pièces obtenues par polissage à l'aide de telles machines.

Elle a donc pour objet une machine pour le polissage de pièces, comprenant un châssis, une table porte-pièce déplaçable horizontalement selon au moins une direction et un support déplaçable par rapport au châssis et portant un ensemble de polissage comportant un porte-outil porté par un coulisseau déplaçable en translation par des moyens à excentrique entraînés par un moteur électrique pour communiquer à ce porte outil un mouvement de translation alternatif, et des moyens presseurs appliquant ledit porte-outil sur la pièce à polir avec un effort constant mais réglable, les moyens pour communiquer au porte-outil un mouvement de translation alternatif étant constitués par un ensemble bielle-manivelle intérieur monté dans le coulisseau, caractérisé en ce que la machine comprend en outre des moyens pour communiquer à l'outil un mouvement de rotation autour de son axe, l'outil comportant une queue par laquelle il est fixé dans le porte-outil et une tige pourvue d'une monture pour une pierre à polir, la tige étant montée à rotation dans un carter solidaire de la queue et qui porte un moteur d'entraînement en rotation de la tige par l'intermédiaire d'organes de transmission contenus dans le carter.

L'invention sera mieux comprise à l'aide de la description qui va suivre, donnée uniquement à titre d'exemple et faite en se référant aux dessins annexés, sur lesquels :
- la Fig.1 est une vue schématique générale d'une machine de polissage suivant l'invention ;
- la Fig.2 est une vue partielle en élévation et en coupe de la machine de polissage de la Fig.1, dont le porte-outil a été retiré ;
- la Fig.3 est une coupe suivant la ligne 3-3 de la Fig.2.

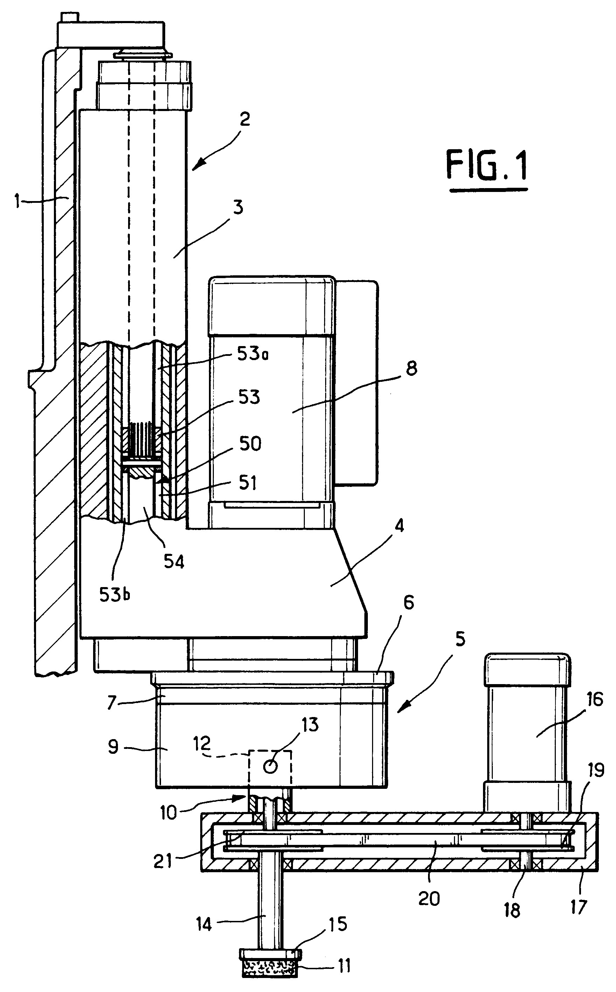

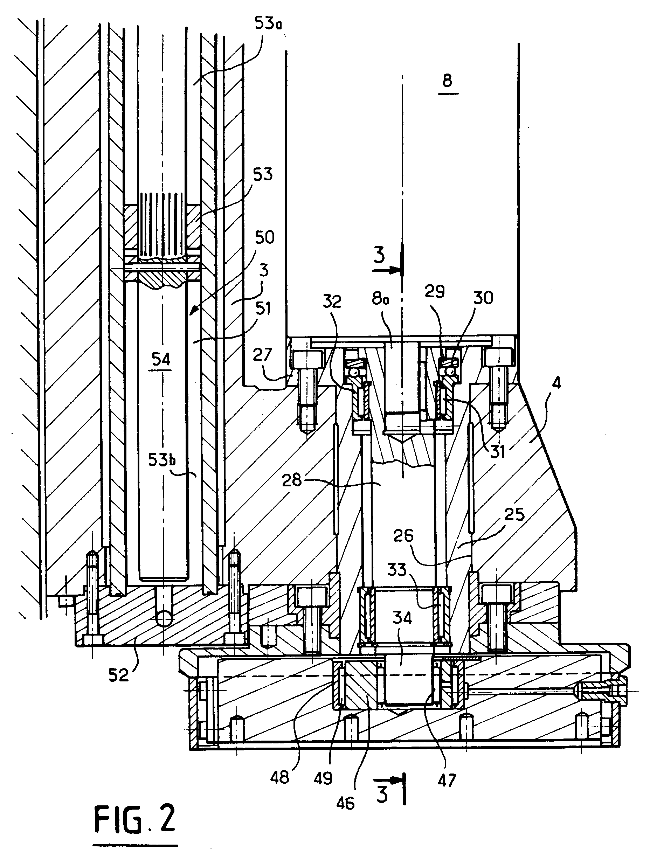

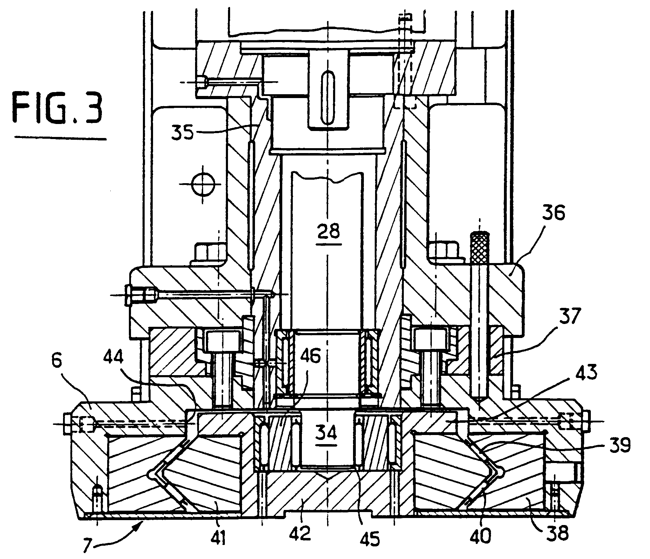

La machine de polissage représentée à la Fig.1 comporte principalement un châssis 1 s'étendant verticalement et sur lequel est montée à coulissement une tête de polissage désignée par la référence générale 2 et comportant une colonne 3 en forme générale d'équerre déplaçable verticalement sur le châssis 1. Sur la branche horizontale 4 de la colonne 3 est fixé un ensemble 5 de mise en vibrations comportant un support 6 pour un coulisseau 7 dont la construction détaillée sera décrite en référence aux Fig.2 et 3.

Au-dessus de la branche horizontale 4 de la colonne 3 est disposé un moteur électrique 8 d'entraînement en rotation d'un ensemble bielle-manivelle intérieur destiné à communiquer au coulisseau 7 un mouvement de translation alternatif et dont la structure sera également décrite en détail en référence aux Fig.2 et 3.

Au coulisseau 7 est fixé un porte-outil 9 dans lequel est monté un outil 10 portant à son extrémité libre une pierre à polir 11.

Selon le mode de réalisation préféré représenté à la Fig.1, l'outil 10 comporte une queue 12 engagée dans le porte-outil 9 et immobilisée dans celui-ci à l'aide d'une vis 13 et prolongée par une partie tournante 14 pourvue d'une monture 15 pour la pierre 11 et entraînée en rotation par un petit moteur électrique 16 porté par un carter 17 dans lequel sont montés à rotation la tige 14 de l'outil et l'arbre de sortie 18 du moteur électrique 16 d'entrainement de celui-ci.

Sur l'arbre de sortie 18 est montée une poulie 19 reliée par une courroie 20 à une poulie 21 calée sur la tige 14 de l'outil 10.

La construction du dispositif de mise en vibration à excentrique de la machine polisseuse suivant l'invention va maintenant être décrit en référence aux Fig.2 et 3.

Le moteur électrique 8 d'entraînement de l'ensemble bielle-manivelle est monté dans la branche horizontale 4 de la colonne 3 par l'intermédiaire d'une douille de centrage 25 engagée dans un alésage axial 26 du support et pourvue à son extrémité supérieure d'une collerette 27 par laquelle elle est fixée à la partie horizontale 4 de ce support.

L'arbre de sortie du moteur 8 est constitué par un arbre de sortie proprement dit 8a sur lequel est clavetée une pièce cylindrique 28 formant arbre récepteur pourvue à sa partie supérieure d'un épaulement 29 au moyen duquel elle prend appui sur une butée à billes 30 combinée avec un roulement à aiguilles 31 disposés dans un trou épaulé axial 32 de la douille de centrage 25.

A son extrémité opposée à l'arbre de sortie 8a du moteur 8, l'arbre récepteur 28 est monté à rotation dans la douille 25 par l'intermédiaire d'un autre roulement à aiguilles 33. L'arbre récepteur 28 se termine par un maneton excentré 34 formant manivelle qui constitue l'un des organes de l'ensemble bielle-manivelle intérieur du dispositif de mise en vibrations de la machine suivant l'invention.

Comme représenté à la Fig.3, la douille de centrage 25 traverse une partie amincie 35 de la partie horizontale 4 du support 3, cette partie amincie se terminant par une bride 36 à laquelle est fixé le support de chariot 6 avec interposition d'une couronne de centrage 37.

Le chariot ou coulisseau désigné par la référence générale 7 est en fait constitué par une cage en équerre 38 à deux rangées d'aiguilles 39, 40, montée fixe dans le support de chariot 6 et par un chariot 41 présentant des parois latérales de roulement pour les rangées d'aiguilles 39,40 et de ce fait déplaçable latéralement dans la cage en équerre 38.

Dans le chariot 41 est montée une pièce 42 de réception de l'ensemble bielle-manivelle, cette pièce comportant un plateau 43 qui prend appui sur la paroi supérieure du chariot 41. Le plateau 43 est engagé avec jeu dans un logement 44 ménagé dans le support de chariot 6.

La pièce 42 de réception de l'ensemble bielle-manivelle comporte un évidement borgne 45 de forme cylindrique dans lequel est engagé l'ensemble de bielle-manivelle qui comporte le maneton excentré 34 de l'arbre récepteur 28, une bague excentrée 46 montée autour du maneton 34 avec interposition d'une cage à aiguilles 47 et une bague extérieure 48 entourant la bague excentrée 46 avec interposition d'un ensemble d'aiguilles 49. En considérant tour à tour les Fig.2 et 3, on constate que l'axe vertical de la bague excentrée 46 est parallèle à l'axe de l'arbre récepteur 28 et se trouve avec l'axe de l'arbre récepteur dans un plan parallèle à la direction de déplacement du chariot 41 qui est en fait le plan de symétrie longitudinal du chariot.

Compte tenu du fait que le chariot 41 n'est autorisé à se déplacer que dans une direction déterminée par les rangées d'aiguilles 39 , 40, interposées entre le chariot et la cage en équerre 38, la mise en rotation de l'arbre récepteur 28 par le moteur électrique 8 provoque le déplacement du maneton 34 à la façon d'une manivelle et de ce fait un mouvement d'oscillation de la bague excentrée 46 par rapport au maneton 34 et à la bague extérieure 47 de l'ensemble, ce qui provoque un déplacement alternataif en translation du chariot 41 avec une fréquence correspondant à la vitesse angulaire de rotation du moteur électrique d'entraînement 8. Dans cet agencement, la bague excentrée joue donc le rôle de manivelle.

Comme représenté aux Fig.1 et 2, dans la colonne 3 est monté comme connu en soi, un dispositif de déplacement vertical du support de tête de polissage par rapport au châssis. Ce dispositif de déplacement comprend un vérin hydraulique à simple effet 50 dont le cylindre 51 fermé à sa partie inférieure par un bouchon 52 contient un piston 53 porté par une tige fixe 54 solidaire du châssis 1. Le piston 53 délimite dans le cylindre 51 une chambre 53a, destinée à être alimentée en fluide sous pression par des orifices non représentés. Les différences du débit provoquent le déplacement du cylindre 51 et de la colonne 3 par rapport à la tige fixe 54.

On voit que grâce à l'agencement qui vient d'être décrit, en référence aux Fig.1 à 3, l'outil de polissage est soumis simultanément à un mouvement vibratoire alternatif en raison du déplacement en translation alternatif du chariot 41 et d'autre part à un mouvement de rotation sous l'effet du moteur électrique d'entraînement 16.

On obtient donc au niveau de la pierre, un mouvement rotatif vibrant qui permet d'aboutir à des passes de polissage beaucoup plus régulières qu'avec un outil soumis soit à un mouvement de vibrations, soit à un mouvement de rotation seuls.

En effet, dans le cas d'un entraînement de l'outil seulement en rotation, des défauts sont engendrés par la force centrifuge en raison en particulier d'une vitesse de la partie de l'outil se trouvant à la périphérie de celui-ci supérieure à celle de la partie centrale de l'outil.

L'outil a alors tendance à plonger et à laisser une trace périphérique qui compromet l'état de surface de la pièce à polir.

Dans le cas d'un mouvement de rotation et de vibration combinés, l'outil ne se trouve jamais dans une position fixe par rapport à la pièce, de sorte que les attaques que subit celle-ci du fait de la rotation de l'outil sont plus régulières.

Le fait de combiner les mouvements de vibrations et de rotation de l'outil permet en raison de la présence de la rotation, un meilleur taux d'enlèvement de la matière.

## Revendications

1. Machine pour le polissage de pièces, comprenant un châssis (1), une table porte-pièce déplaçable horizontalement selon au moins une direction et un support (3) déplaçable par rapport au châssis et portant un ensemble de polissage comportant un porte-outil (9) porté par un coulisseau (41) déplaçable en translation par des moyens à excentrique entraînés par un moteur électrique (8) pour communiquer à ce porte-outil (9) un mouvement de translation alternatif, et des moyens presseurs appliquant ledit porte-outil sur la pièce à polir avec un effort constant mais réglable, les moyens pour communiquer au porte-outil un mouvement de translation alternatif étant constitués par un ensemble bielle-manivelle intérieur (34, 46) monté dans le coulisseau (41), caractérisée en ce que la machine comporte en outre des moyens (16, 19, 20, 21) pour communiquer à l'outil (10) un mouvement de rotation autour de son axe, l'outil (10) comportant une queue (12) par laquelle il est fixé dans le porte-outil (9) et une tige (14) pourvue d'une monture (15) pour une pierre à polir (11), la tige étant montée à rotation dans un carter (17) solidaire de la queue (12) et qui porte un moteur (16) d'entraînement en rotation de la tige (14) par l'intermédiaire d'organes de transmission (19, 20, 21) contenus dans le carter.

2. Machine suivant la revendication 1, caractérisée en ce que l'ensemble bielle-manivelle intérieur comporte un maneton formant manivelle (34) porté par un arbre récepteur (28) entraîné par le moteur électrique (8), le maneton (34) coopérant avec une bague excentrée (46) dont l'axe est parallèle à l'axe de l'arbre récepteur (28) et se trouve avec ce dernier dans un plan parallèle à la direction de déplacement du coulisseau (41), la bague excentrée (46) étant à son tour montée à rotation dans un logement (45) ménagé dans le coulisseau (41).

3. Machine suivant la revendication 2, caractérisée en ce que le maneton (34) est monté dans la bague excentrée (46) avec interposition d'une cage à aiguilles (47) et en ce que la bague excentrée (46) est montée à rotation dans le logement (45) du coulisseau (41) par l'intermédiaire d'une bague extérieure (48) avec interposition d'un ensemble d'aiguilles (49).

4. Machine suivant l'une des revendications 2 et 3, caractérisée en ce que le coulisseau (41) constitue un chariot monté déplaçable en translation dans une cage à aiguilles (38,39,40) solidaire d'un support de chariot (6) fixé à une colonne (3) déplaçable verticalement par rapport au châssis (1), le chariot (41) portant une pièce (42) de réception de l'ensemble bielle-manivelle (34,46), le logement (45) pour l'ensemble bielle-manivelle étant ménagé dans ladite pièce de réception (42).

5. Machine suivant l'une des revendications 1 à 4, caractérisée en ce que le moteur (16) est électrique

6. Machine suivant l'une des revendications 1 à 5, caractérisée en ce que les organes de transmission sont constituée par des poulies (19,21) respectivement fixées à la tige (14) de l'outil (10) et à l'arbre de sortie du moteur électrique (16) d'entraînement de l'outil en rotation et par une courroie (20) de liaison de ces poulies.

## Claims

1. A machine for polishing objects, comprising a frame (1), an object-holding table which can be moved horizontally in at least one direction and a support (3) which can be moved with respect to the frame and which supports a polishing unit comprising a tool-holder (9) carried by a slide (41) driven in translational motion by eccentric-equipped means driven by an electric motor (8) to impart a reciprocating translation movement to the tool-holder (9), and presser means for pressing the said tool-holder against the object to be polished with a constant but adjustable force, the means for imparting a reciprocating translation movement to the tool-holder comprising an internal connecting rod-crank assembly (34, 46) mounted in the slide (41), characterised in that the machine also comprises means (16, 19, 20, 21) for imparting a rotational movement about its own axis to the tool (10), the tool (10) comprising a tail piece (12) by means of which it is secured to the tool-holder (9) and a shaft (14) provided with a mounting (15) for a polishing stone (11), the shaft being mounted so as to rotate in a housing (17) which is incorporated with the tail piece (12) and which supports a motor (16) which drives the shaft (14) in rotation through the intermediary of transmission means (19, 20, 21) contained within the frame.

2. A machine according to claim 1, characterised in that the internal connecting rod-crank assembly comprises an eccentric pin (34) forming a crank mounted on a driven shaft (28) driven by the electric motor (8), the pin (34) acting together with an eccentric ring (46) whose axis is parallel to the axis of the driven shaft (28) and lies together with the latter in a plane parallel to the direction of movement of the slide (41), the eccentric ring (46) being in turn mounted so as to rotate in a housing (45) made in the slide (41).

3. A machine according to claim 2, characterised in that the pin (34) is mounted in the eccentric ring (46) with the interposition of a needle cage (47) and in that the eccentric ring (46) is mounted so as to rotate in the housing (45) in the slide (41) through the intermediary of an outer ring (48) with the interposition of a needle assembly (49).

4. A machine according to either of claims 2 or 3, characterised in that the slide (41) comprises a carriage mounted so as to move in translation within a needle cage (38, 39, 40) incorporated with a carriage support (6) fixed to a column (3) which can be moved vertically with respect to the frame (1), the carriage (41) bearing a member (42) for receiving the connecting shaft-crank assembly (34, 46), the housing (45) for the connecting rod-crank assembly being provided in the said receiving member (42).

5. A machine according to any one of claims 1 to 4, characterised in that the motor (16) is electric.

6. A machine according to one of claims 1 to 5, characterised in that the transmission means comprise pulleys (19, 21) fastened to the shaft (14) for the tool (10) and the output shaft of the electric motor (16) which drives the tool in rotation respectively, and a belt (20) connecting these pulleys.

## Patentansprüche

1. Maschine zum Schleifen von Werkstücken, umfassend ein Grundgestell (1), einen mindestens in einer Richtung horizontal beweglichen Werkstücktisch und einen in bezug auf das Grundgestell beweglichen Träger (3), der eine Schleifeinheit trägt, die einen Werkzeughalter (9), der von einem Schlitten (41) getragen wird, der durch von einem Elektromotor (8) angetriebene Exzentermittel hin- und herbeweglich ist, um dem Werkzeughalter (9) eine wechselnde Translationsbewegung mitzuteilen, und Druckmittel enthält, die diesen Werkzeughalter mit einer gleichbleibenden, aber einstellbaren Kraft auf das zu schleifende Werkstück anpressen, wobei die Mittel, um dem Werkzeughalter eine wechselnde Translationsbewegung zu verleihen, aus einer im Schlitten (41) befestigten inneren Schubstangen-Kurbel-Einheit (34, 46) bestehen, **dadurch gekennzeichnet, daß** die Maschine außerdem Mittel (16, 19, 20, 21) umfaßt, um dem Werkzeug (10) eine Drehbewegung um dessen Achse mitzuteilen, wobei das Werkzeug (10) ein Endstück (12), mit welchem es im Werkzeughalter (9) befestigt ist, und eine mit einer Fassung (15) für einen Schleifstein (11) versehene Welle (14) enthält, die drehbar in einem Gehäuse (17) angebracht ist, das fest mit dem Endstück (12) verbunden ist und einen Antriebsmotor (16) trägt, der über im Gehäuse befindliche Übertragungsorgane (19, 20, 21) die Welle (14) rotieren läßt.

2. Maschine nach Anspruch 1, **dadurch gekennzeichnet, daß** die innere Schubstangen-Kurbel-Einheit einen die Kurbel bildenden Kurbelzapfen (34) enthält, der von einer Abtriebswelle (28) getragen wird, die vom Elektromotor (8) angetrieben ist, wobei der Kurbelzapfen (34) mit einem exzentrischen Ring (46) zusammenwirkt, dessen Achse parallel zur Achse der Abtriebswelle (28) verläuft und sich mit ihr in einer Ebene befindet, die zur Bewegungsrichtung des Schlittens (41) parallel steht, wobei der exzentrische Ring (46) seinerseits in einer im Schlitten (41) vorgesehenen Aufnahme (45) drehbar angebracht ist.

3. Maschine nach Anspruch 2, **dadurch gekennzeichnet, daß** der Kurbelzapfen (34) mit Zwischenschaltung eines Nadelkäfigs (47) in dein exzentrischen Ring (46) angeordnet ist, welcher über einen Außenring (48) mit Zwischenschaltung einer Nadeleinheit (49) drehbar in der Aufnahme (45) des Schlittens (41) angebracht ist.

4. Maschine nach Anspruch 2 oder 3, **dadurch gekennzeichnet, daß** der Schlitten (41) einen Wagen bildet, der hin- und herbeweglich in einem Nadelkäfig (38, 39, 40) angebracht ist, der fest mit einem an einer in bezug auf das Grundgestell (1) senkrecht beweglichen Säule (3) befestigten Wagenhalter (6) verbunden ist, wobei der Wagen (41) ein Aufnahmeteil (42) für die Schubstangen-Kurbel-Einheit (34, 46) trägt und die Aufnahme (45) für die Schubstangen-Kurbel-Einheit in diesem Aufnahmeteil (42) angebracht ist.

5. Maschine nach einem der Ansprüche 1 bis 4, **dadurch gekennzeichnet, daß** der Motor (16) ein Elektromotor ist.

6. Maschine nach einem der Ansprüche 1 bis 5, **dadurch gekennzeichnet, daß** die Übertragungsorgane aus Seilscheiben (19 21), die jeweils an der Welle (14) des Werkzeugs (10) und an der Ausgangswelle des elektrischen Antriebsmotors (16) für die Rotation des Werkzeugs befestigt sind, und aus einem Treibriemen (20) bestehen, der diese Seilscheiben miteinander verbindet.
